# EUROPÄISCHE PATENTANMELDUNG

(11) **EP 1 157 802 A2**
(43) Veröffentlichungstag der Anmeldung: **28.11.2001**
(21) Anmeldenummer: 01109558.5
(22) Anmeldetag: 18.04.2001
(51) Int. Cl.: B29C 45/16

(54) **Kunststoffbehältnis**

(30) Priorität: 22.05.2000 DE 10024949
(71) Anmelder: Kautex Textron GmbH & Co. KG., 53229 Bonn (DE)
(72) Erfinder: Koith, Jörg, 53842 Troisdorf (DE)
(74) Vertreter: Patentanwälte Lippert, Stachow, Schmidt & Partner

(57) **Zusammenfassung**

Die Erfindung betrifft ein durch Extrusionsblasformen hergestelltes Kunststoffbehältnis. Die Wandung des Kunststoffbehältnisses ist erfindungsgemäß wenigstens in Teilbereichen mit reversibel thermochromen Pigmenten eingefärbt, die in einem oder mehreren bestimmten Temperaturbereichen einen Farbumschlag oder eine Farbänderung erfahren, wobei die Einfärbung durch Zugabe der Pigmente bei der Extrusion erhalten wurde.

## Beschreibung

Es ist bekannt, Gebinde oder Verpackungen zur Aufnahme, zum Transport und zur Lagerung von temperaturempfindlichen Füllgütern oder Flüssigkeiten oder zur Aufnahme von zu sterilisierenden Produkten mit Temperaturindikatoren zu versehen, die eine visuelle Anzeige liefern, wenn das betreffende Behältnis oder die betreffende Verpackung einer bestimmten kritischen Temperatur ausgesetzt war. Solche Temperaturindikatoren werden beispielsweise bei der Verpackung von Tiefkühlkost eingesetzt, um eine optische Anzeige zu gewährleisten, wenn die Kühlkette des verderblichen Guts unterbrochen wurde. Hierzu finden beispielsweise Bedruckungen mit thermochromen Farben oder thermochromen Pigmenten Anwendung, die bei Erreichen einer bestimmten Temperatur einen irreversiblen Farbumschlag erfahren. Auch sind zu diesen Zwecken thermochrom eingefärbte Etiketten bekannt. Als thermochrome Pigmente oder thermochrome Farben werden im Allgemeinen Farben oder Pigmente bezeichnet, die beim Über- bzw. Unterschreiten spezifischer Umwandlungstemperaturen reversible oder irreversible Farbänderungen erfahren, letztere jedoch nur beim Überschreiten bestimmter Umwandlungstemperaturen.

Die Herstellung von Thermoindikatoren mittels solcher Pigmente oder Farben ist verhältnismäßig teuer, nicht zuletzt auf Grund des hohen Preises der hierfür benötigten Ausgangsstoffe. Oftmals besteht das Bedürfnis, Flaschen, insbesondere Laborflaschen, Reagenzienbehälter oder andere preiswert herzustellende Massenartikel mit solchen Thermoindikatoren zu versehen. Der Aufwand für eine entsprechende Bedruckung oder Etikettierung solcher Behältnisse mit Thermoindikatoren steht dabei in keinem Verhältnis zu den Herstellungskosten der Behältnisse. Außerdem unterliegen Bedruckungen oder Etikettierungen der Abnutzung, was insbesondere bei mehrfach wieder zu verwendenden Behältnissen oder bei zu sterilisierenden Behältnissen nicht wünschenswert ist.

Der Erfindung liegt daher die Aufgabe zu Grunde, ein völlig neuartiges Kunststoffbehältnis zu schaffen, das die vorstehend beschriebenen Nachteile nicht aufweist.

Die Aufgabe wird gelöst durch ein durch Extrusionsblasformen hergestelltes Kunststoffbehältnis, dessen Wandungen wenigstens in Teilbereichen mit reversibel thermochromen Pigmenten eingefärbt ist, die in einem oder mehreren bestimmten Temperaturbereichen einen Farbumschlag oder eine Farbänderung erfahren, wobei die Einfärbung durch Zugabe einer mit Pigmenten durchsetzten Schmelze bei der Extrusion erhalten wurde.

Die Herstellung von Kunststoffhohlkörpern oder Kunststoffbehältnissen durch Extrusionsblasformen aus Kunststoffen unterschiedlicher Eigenschaften ist an und für sich bekannt. Beispielsweise ist es bekannt, Kunstoffbehälter mit transparenten und nicht transparenten Bereichen durch Extrusionsblasformen herzustellen, wobei in dem beim Extrusionsblasformen herzustellenden schlauchförmigen Vorformling ein oder mehrere streifenförmige Abschnitte transparenten Materials vorgesehen werden, beispielsweise durch Ausbildung entsprechender Fließkanäle im Extrusionskopf, die durch einen oder mehrere zusätzliche Extruder mit schmelzflüssigem Material beaufschlagt werden. Auf diese Art und Weise werden beispielsweise Sichtstreifen oder Sichtfenster in Kunstoffbehältern wie Ölkanistern oder dergleichen hergestellt. Diese Technik ist hinlänglich bekannt, so dass hierauf nachstehend nicht näher eingegangen wird.

Die Erfindung macht sich diese Technik zu Nutze, um in einem sehr einfachen und kostengünstigen Verfahren Behälter, wie beispielsweise Laborflaschen oder dergleichen in einfacher Art und Weise bereits bei der Herstellung mit Thermoindikatoren zu versehen, d.h. diese wenigstens in Teilbereichen mit reversibel thermochromen Pigmenten einzufärben.

Da die thermochromen Pigmente bei Anwendung des zuvor beschriebenen Extrusionsblasverfahrens naturgemäß mit dem aufzuschmelzenden Rohstoff verhältnismäßig stark erhitzt werden-in der Regel über deren spezifische Umwandlungstemperatur hinaus - ist es nur sinnvoll, reversibel thermochrome Pigmente zu verwenden.

Zweckmäßigerweise ist die Einfärbung des Behältnisses in Form wenigstens eines sich über eine Wandung desselben erstreckenden Streifens vorgesehen. Ein solcher Streifen lässt sich mit dem eingangs beschriebenen Verfahren relativ einfach realisieren, zweckmäßigerweise ist dieser Streifen so verlaufend angeordnet, dass er bereits in dem schlauchförmigen Vorformling als sich in Längsrichtung, d.h. in Extrusionsrichtung, erstreckender Streifen ausgebildet ist. Es ist für den Fachmann ersichtlich, dass sich dieser Streifen nicht notwendigerweise auch in Längsrichtung des fertig geblasenen Behältnisses erstrecken muss. Grundsätzlich ist es jedoch auch möglich, durch entsprechende Extrusionsverfahren quer verlaufende Streifen oder Abschnitte oder auch Wendelstreifen sowohl auf dem Vorformling als auch in dem fertigen Behältnis zu erzeugen. Solche Extrusionstechniken sind ebenfalls hinlänglich bekannt. Beispielsweise sind hierzu intermittierende Extrusionsverfahren mit der abschnittsweisen Extrusion verschiedener Schmelzen oder auch sich drehende Extrusionsköpfe bekannt.

Vorzugsweise finden thermochrome Pigmente Anwendung, die bei Temperatureinwirkung in bestimmter Höhe verblassen. Solche Pigmente sind im Handel verfügbar.

Da die Verwendung solcher Pigmente den Nachteil mit sich bringt, dass die eingefärbten Bereiche des Behältnisses bei Erreichen der spezifischen Umwandlungstemperatur des Pigments nicht sichtbar sind, ist es besonders vorteilhaft, wenn die thermochromen Pigmente nur einen Teilbereich der Wandstärke des Behältnisses durchsetzen, wobei die Reststärke des betreffenden Wandungsbereichs zumindest teilweise mit thermostabilen Pigmenten durchsetzt ist, so dass der Thermoindikator bzw. die eingefärbten Teilbereiche des Behältnisses bei Erreichen des Farbumschlags, d.h. beim Übergang der thermochromen Pigmente vom farbigen in den transparenten Zustand, der Indikator noch sichtbar sind. In diesem Falle würden diese Bereiche die Grundfarbe der thermostabilen Pigmente annehmen.

Beispielsweise können die thermochromen Pigmente den äußeren Bereich der Wandung des Behältnisses durchsetzen und darunterliegend angeordnete thermostabile Pigmente nach außen abdekken. Alternativ ist es möglich, dass die thermochromen Pigmente den inneren Bereich der betreffenden Wandung durchsetzen und die thermostabilen Pigmente die thermochromen Pigmente nach außen abdecken, dies setzt voraus, dass zumindest die thermostabil eingefärbten Bereiche noch eine Mindestlichtdurchlässigkeit aufweisen.

Alternativ hierzu ist es weiterhin möglich, dass der Kunststoff mit den thermochromen Pigmenten mit thermostabilen Pigmenten gemischt ist, so dass sich eine Mischfarbe ergibt. Bei Erreichen der spezifischen Umwandlungstemperatur werden nur die thermochromen Pigmente transparent, so dass eine Grundfärbung verbleibt.

Eine Ausführungsform des erfindungsgemäßen Behältnisses zeichnet sich dadurch aus, dass mehrere thermochrom eingefärbte Bereiche vorgesehen sind, deren Temperaturansprechverhalten auf verschiedene Temperaturbereiche eingestellt ist. Es ist ohne weiteres möglich, diese Bereiche mit verschiedenem Temperaturansprechverhalten sowohl übereinander liegend als auch nebeneinander anliegend bzw. aneinander angrenzend auszubilden. Bei übereinander angeordneten Bereichen verschiedenen Temperaturansprechverhaltens bzw. aus Sicht des Betrachters von außen auf das Behältnis hintereinander liegend angeordneten Bereichen verschiedenen Temperaturansprechverhaltens werden je nach erreichter Umwandlungstemperatur verschiedener Farbnuancen angezeigt.

Bei einem als Flasche ausgebildeten Behältnis mit rundem Querschnitt ist es zweckmäßig, wenn auf dem Außenumfang der Flasche wenigstens drei in einem Winkelabstand von 120° voneinander angeordnete thermochrom eingefärbte Streifen vorgesehen sind. Diese Anordnung hat den Vorzug, dass wenigstens einer der Streifen immer sichtbar ist, unabhängig von der räumlichen Anordnung der Flasche.

Bei einer Ausgestaltung des Behältnisses mit vieleckigem Querschnitt kann beispielsweise jede Wandungsfläche mit wenigstens einem thermochrom eingefärbten Streifen versehen sein.

Ein Behältnis der vorstehend beschriebenen Art eignet sich besonders als Labor- bzw. Probenflasche zur Aufnahme temperaturempfindlicher Flüssigkeiten oder zur Aufnahme von Flüssigkeiten oder Proben, die in einem bestimmten Bereich temperiert aufbewahrt werden müssen. Eine vorteilhafte Anwendung wäre beispielsweise die Ausbildung des Behältnisses als Flasche zur Aufnahme von Fotochemikalien, die für einen Entwicklungsprozess in einem begrenzten Temperaturfenster temperiert werden müssen.

Weiterhin wird gemäß der Erfindung die Verwendung eines Behältnisses der vorstehend beschriebenen Art als Säuglingsnahrungsflasche vorgeschlagen, mit wenigstens zwei thermochrom eingefärbten Bereichen, vorzugsweise in Form von Streifen, die ein unterschiedliches Temperaturansprechverhalten aufweisen und ein Temperaturfenster für einen bevorzugten Temperaturbereich des Füllgutes definieren.

Schließlich wird gemäß der Erfindung ein Verfahren zur Herstellung eines Behältnisses der vorstehend beschriebenen Art vorgeschlagen, bei welchem ein schlauchförmiger Vorformling aus thermoplastischem Kunststoff extrudiert wird und durch anschließende Aufweitung in einer im wesentlichen geschlossenen Blasform eine Umformung in die endgültige Gestalt erfährt, das sich dadurch auszeichnet, dass dem Extrudat vor Austritt aus dem Extrusionskopf an einer oder mehreren Stellen über den Umfang des schlauchförmigen Vorformlings verteilt ein schmelzflüssiger Kunststoff mit reversibel thermochromen Pigmenten in Form von streifenförmigen Einlagerungen zugegeben oder aufgegeben wird, derart, dass die betreffenden Wandungsabschnitte des Vorformlings entweder ganz oder nur teilweise mit thermochromen Pigmenten durchsetzt sind.

Es ist für den Fachmann selbstverständlich, dass grundsätzlich auch die vollständige Einfärbung eines Behältnisses mit thermochromen Pigmenten in Betracht kommt, wobei aus Kostengründen, d.h. aus Gründen des sparsamen Umgangs mit verhältnismäßig teurem Pigment, auch die Möglichkeit besteht, das Behältnis mittels Coextrusion herzustellen, wobei eine dünne innere Schicht, äußere Schicht oder Zwischenschicht mit thermochromen Pigmenten vorgesehen sein kann.

Die Erfindung wird nachstehend anhand eines in den Zeichnungen dargestellten Ausführungsbeispiels erläutert. Es zeigen:
- Fig. 1: die Ansicht einer im Extrusionsblasverfahren hergestellten Flasche nach der Erfindung,
- Fig. 2: eine Draufsicht auf die in Fig. 1 dargestellte Flasche
- Fig. 3: einen Teilquerschnitt durch die Flasche im Bereich des Ausschnitts III in Fig. 1 gemäß einer ersten Ausführungsform der Erfindung.
- Fig. 4: einen Teilschnitt durch die Flasche entsprechend demjenigen in Fig. 3 gemäß einem zweiten Ausführungsbeispiel der Erfindung.

- Fig. 5: eine den Figuren 3 und 4 entsprechende Schnittansicht gemäß einem dritten Ausführungsbeispiel der Erfindung und
- Fig. 6: einer Querschnittsansicht der Flasche gemäß einem vierten Ausführungsbeispiel der Erfindung.

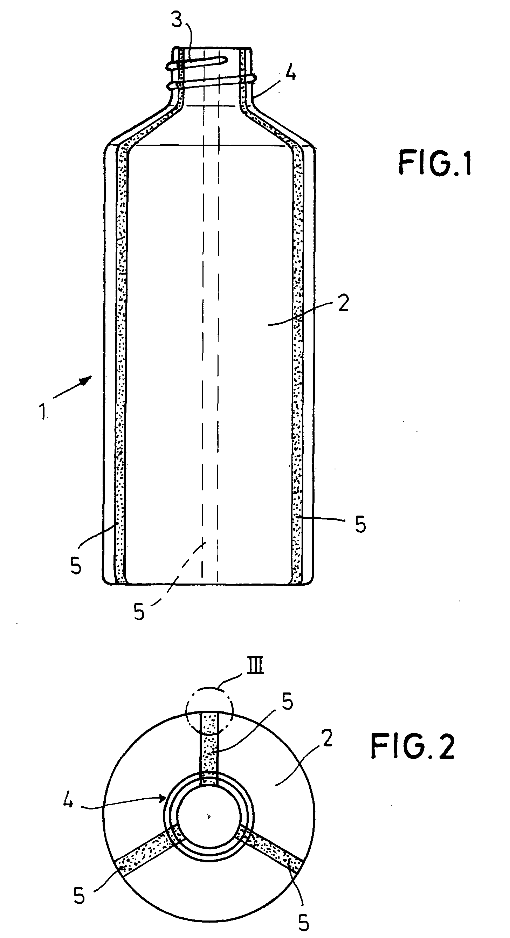

Die in Figur 1 dargestellte Flasche 1 ist nach dem vorliegenden Ausführungsbeispiel als Laborflasche aus Polyethylen ausgeführt, wobei diese aus einem im Querschnitt runden Flaschenkörper mit einem mit Gewinde 3 versehenen Flaschenhals 4 besteht, der in üblicher Art und Weise eine Auslauf- und Befüllöffnung bildet.

Die Flasche 1 wurde durch Extrusionsblasformen hergestellt, wobei, wie eingangs bereits beschrieben wurde, die Herstellung auf bekannte Art und Weise durch Extrudieren eines schlauchförmigen Vorformlings und Aufweiten desselben in einer im wesentlichen geschlossenen zweiteiligen Blasform zur Umformung in die endgültige Gestalt erfolgte.

Mit 5 sind drei im Winkelabstand von 120° über den Umfang der Flasche 1 verteilt angeordnete Indikatorstreifen bezeichnet, die mit reversibel thermochromen Pigmenten eingefärbt sind, welche in einem oder mehreren bestimmten Temperaturbereichen einen Farbumschlag oder eine Farbänderung erfahren. Im vorliegenden Fall besteht der Flaschenkörper 2 bzw. die gesamte Flasche 1 aus einem milchig transparenten Polyethylen, die Indikatorstreifen 5 können beispielsweise rot eingefärbt sein. Bei Erreichen einer spezifischen Umwandlungstemperatur, die beispielsweise 30 oder 35°C betragen kann, erfolgt eine Farbänderung der Indikatorstreifen 5 von rot oder rosa bis hin zur Grundfarbe (milchig-transparent) der Flasche 1. Wie vorstehend ebenfalls bereits erwähnt, können bespielsweise die in Figur 1 dargestellten Indikatorstreifen 5 jeweils ein unterschiedliches Temperaturansprechverhalten für verschiedene spezifische Umwandlungstemperaturen aufweisen, so dass sich entweder die Umgebungstemperatur der Flasche 1 oder deren Füllgut auf ein bestimmtes Temperaturfenster temperieren lässt. Gleichzeitig hat die verteilte Anordnung der Indikatorstreifen 5 mit einem Winkelabstand von 120° den Vorzug, dass die Indikatorstreifen 5 aus jeder Blickrichtung auf die runde Flasche 1 sichtbar sind.

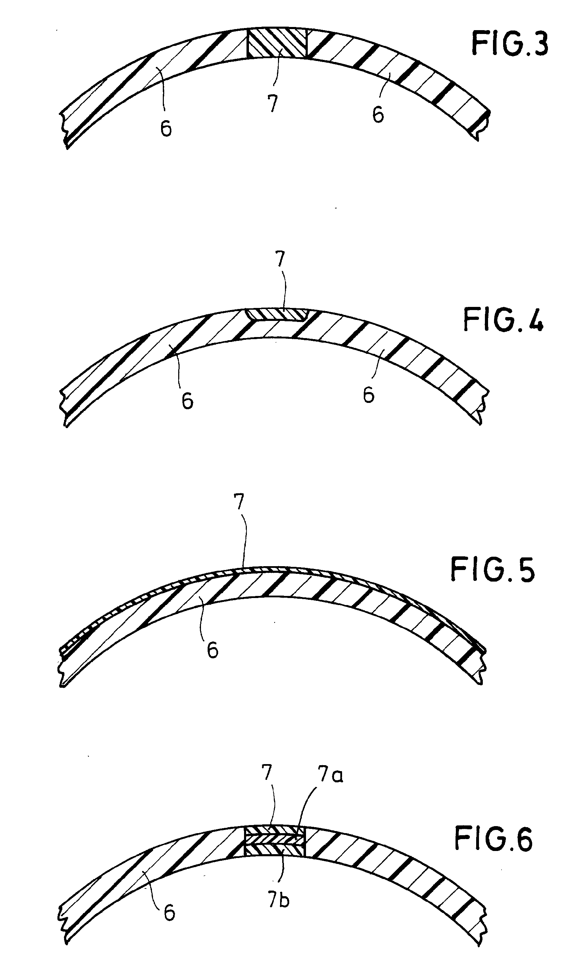

Bei dem in Figur 3 dargestellten Schnitt ist die einfachste Ausgestaltung der Indikatorstreifen 5 gezeigt. Mit 6 ist in den Schnittansichten der Grundwerkstoff bezeichnet, mit 7 sind die mit reversibel thermochromen Pigmenten eingefärbten bzw. durchsetzten Bereiche bezeichnet. Bei der in Figur 3 gezeigten Ausführungsform erstreckt sich der einen Indikatorstreifen 5 bildende thermochrom eingefärbte Bereich 7 über die gesamte Wandstärke der Flasche 1 und ist beiderseits vom Grundwerkstoff 6 der Flasche 1 eingegrenzt.

Alternativ hierzu können sich, wie dies in Figur 4 dargestellt ist, die thermochrom eingefärbten Bereiche 7 nur über eine Teilstärke der Flaschenwandung erstrecken, und zwar aus Gründen der Materialersparnis, denn, wie eingangs bereits erwähnt, ist der thermochrom eingefärbte Werkstoff unverhältnismäßig viel teurer als der Grundwerkstoff, so dass ein sparsamer Umgang hiermit wünschenswert ist.

Bei dem in Figur 5 dargestellten Ausführungsbeispiel erstreckt sich der thermochrom eingefärbte Bereich 7 nur über eine Teilstärke der Flaschenwandung, jedoch über die gesamte Außenfläche des Flaschenkörpers 2 und des Flaschenhalses 4, wobei dieser Aufbau durch Coextrusionsblasformen, d.h. durch Coextrusion eines mehrschichtigen Vorformlings erhalten wurde. Das Coextrusionsverfahren ist ebenso bekannt, wie das Vorsehen von streifenförmigen Einlagerungen in den Vorformling mittels entsprechender Fließkanäle im Extrusionskopf.

In Figur 6 ist schließlich eine Variante der Erfindung dargestellt, bei welcher mehrere streifenförmige Einlagerungen in der Flaschenwandung hintereinander angeordnet sind, wobei der mit 7 bezeichnete thermochrom eingefärbte Bereich mit einem weiteren thermochrom eingefärbten Bereich 7a sowie einem thermostabil eingefärbten Bereich 7b hinterlegt ist. Die thermochrom eingefärbten Bereiche 7 und 7a haben dabei jeweils ein unterschiedliches Temperaturansprechverhalten, so dass je nach Temperatur der Flasche 1 oder deren Füllguts nach außen eine unterschiedliche Farbnuance erzielt wird. Da die verwendeten reversibel thermochromen Pigmente bei Erreichen der spezifischen Umwandlungstemperaturen die Farbe des Grundwerkstoffs 6 annehmen, ist die in Figur 6 gezeigte Anordnung mit einem weiteren thermostabil eingefärbten Bereich 7b hinterlegt, so dass, wenn beispielsweise die Umwandlungstemperatur beider thermochrom eingefärbter Bereiche 7 und 7a erreicht ist, der Indikatorstreifen 5 weiterhin sichtbar ist, so dass die Flasche 1 schlussendlich noch von einer herkömmlichen Flasche unterscheidbar ist. Ein solcher Effekt kann auch dadurch erzielt werden, dass die Indikatorstreifen 5 durch eine Beimischung von thermochromen und thermostabilen Pigmenten gebildet werden, so dass beispielsweise ein Farbumschlag von einer dunklen Farbe in eine helle Grundfarbe erzielt wird.

### Bezugszeichenliste

- 1: Flasche
- 2: Flaschenkörper
- 3: Gewinde
- 4: Flaschenhals
- 5: Indikatorstreifen
- 6: Grundwerkstoff
- 7,7a: Thermochrom eingefärbte Bereiche
- 7b: Thermostabil eingefärbte Bereiche

## Patentansprüche

1. Durch Extrusionsblasformen hergestelltes Kunststoffbehältnis, dessen Wandung wenigstens in Teilbereichen mit reversibel thermochromen Pigmenten eingefärbt ist, die in einem oder mehreren bestimmten Temperaturbereichen einen Farbumschlag oder eine Farbänderung erfahren, wobei die Einfärbung durch Zugabe einer mit Pigmenten durchsetzten Schmelze bei der Extrusion erhalten wurde.

2. Behältnis nach Anspruch 1, **dadurch gekennzeichnet, dass** die Einfärbung in Form wenigstens eines sich über wenigstens eine Wandung des Behältnisses erstreckenden Streifens vorgesehen ist.

3. Behältnis nach Anspruch 1 oder 2, **dadurch gekennzeichnet, dass** thermochrome Pigmente Anwendung finden, die bei Temperatureinwirkung in bestimmter Höhe verblassen oder die Farbe des Grundwerkstoffs des Behältnisses annehmen.

4. Behältnis nach einem der Ansprüche 1 bis 3, **dadurch gekennzeichnet, dass** die thermochromen Pigmente nur einen Teilbereich der Wandstärke des Behältnisses durchsetzen, wobei die Reststärke des betreffenden Wandungsbereichs zumindest teilweise mit thermostabilen Pigmenten durchsetzt ist.

5. Behältnis nach Anspruch 4, **dadurch gekennzeichnet, dass** die thermochromen Pigmente den äußeren Bereich der Wandung durchsetzen und darunter liegend angeordnete thermostabile Pigmente nach außen abdecken.

6. Behältnis nach einem der Ansprüche 1 bis 3, **dadurch gekennzeichnet, dass** die thermochromen Pigmente mit thermostabilen Pigmenten gemischt sind.

7. Behältnis nach einem der Ansprüche 1 bis 6, **dadurch gekennzeichnet, dass** mehrere thermochrom eingefärbte Bereiche vorgesehen sind, deren Temperaturansprechverhalten auf verschiedene Temperaturbereiche eingestellt ist.

8. Behältnis nach einem der Ansprüche 1 bis 7 als Flasche mit rundem Querschnitt, **dadurch gekennzeichnet, dass** auf deren Außenumfang wenigstens drei in einem Winkelabstand von 120° voneinander angeordnete thermochrom eingefärbte Streifen vorgesehen sind.

9. Behältnis nach einem der Ansprüche 1 bis 7 als Flasche mit vieleckigem Querschnitt, **dadurch gekennzeichnet, dass** jede Wandungsfläche mit wenigstens einem thermochrom eingefärbten Streifen versehen ist.

10. Verwendung eines Behältnisses nach einem der Ansprüche 1 bis 9 als Säuglingsnahrungsflasche mit wenigstens zwei thermochrom eingefärbten Bereichen, vorzugsweise in Form von nebeneinanderliegenden Streifen, die unterschiedliches Temperaturansprechverhalten aufweisen und ein Temperaturfenster für einen bevorzugten Temperaturbereich zum Verzehr des Füllguts definieren.

11. Verfahren zur Herstellung eines Behältnisses nach einem der Ansprüche 1 bis 10, bei welchem ein schlauchförmiger Vorformling aus thermoplastischem Kunststoff extrudiert wird und durch anschließende Aufweitung in einer im wesentlichen geschlossenen Blasform eine Umformung in die endgültige Gestalt erfährt, **dadurch gekennzeichnet, dass** dem Extrudat vor Austritt aus dem Extrusionskopf an einer oder mehreren Stellen über den Umfang des schlauchförmigen Vorformlings verteilt ein schmelzflüssiger Kunststoff mit reversibel thermochromen Pigmenten in Form von streifenförmigen Einlagerungen zugegeben oder aufgegeben wird, derart, dass die betreffenden Wandungsabschnitte des Vorformlings entweder ganz oder nur teilweise mit thermochromen Pigmenten durchsetzt sind.
